Europäisches Patentamt

European Patent Office

Office européen des brevets

(11) Numéro de publication: **0 392 904**
**A1**

## DEMANDE DE BREVET EUROPEEN

(21) Numéro de dépôt: **90400945.3**

(22) Date de dépôt: **06.04.90**

(51) Int. Cl.⁵: **B62D 29/04, B62D 25/10, B29C 67/12, B29C 67/14, B32B 5/02**

(30) Priorité: **11.04.89 FR 8904765**

(43) Date de publication de la demande: **17.10.90 Bulletin 90/42**

(84) Etats contractants désignés: **DE ES GB IT**

(71) Demandeur: **REGIE NATIONALE DES USINES RENAULT**
**Boîte postale 103 8-10 avenue Emile Zola**
**F-92109 Boulogne-Billancourt(FR)**

(72) Inventeur: **Michel, Pierre**
**18, Rue de Bû**
**F-28570 Abondant(FR)**

(74) Mandataire: **Saint Martin, René**
**Régie Nationale des Usines Renault 8 & 10, avenue Emile Zola**
**F-92109 Boulogne Billancourt(FR)**

(54) **Pièce de carrosserie automobile à structure composite notamment capot.**

(57) Pièce de carrosserie à structure composite constituée par une plaque en matériau plastique, dans laquelle est noyé un grillage métallique (4), caractérisée par le fait que ce grillage (4) est conformé de manière à entretoiser au moins une couche superficielle (1,2) de fibres de verre, le grillage (4) et la couche de verre (1,2) étant noyés dans le matériau plastique.

Fig. 1

EP 0 392 904 A1

La présente invention se rapporte à une pièce de carrosserie automobile à structure composite constituée par une plaque en matériau plastique, dans laquelle est noyé un grillage métallique.

On connaît déjà des pièces de carrosseries en plastique.

On a déjà proposé dans le brevet européen 0075641 un sandwich composite réalisé par un grillage métallique noyé entre deux couches plastiques. Le grillage est plat et ne convient pas à une pièce de carrosserie en plastique.

La présente invention a pour but de réaliser une pièce à structure sandwich dont les peaux sont renforcées par des couches de fibres de verre et dont l'intercouche est renforcée par un grillage métallique jouant un rôle d'entretoise au moment de l'injection du matériau plastique et un rôle final de renforcement et d'antiparasitage dans le cas des capots.

La pièce selon l'invention est caractérisée par le fait que ce grillage est conformé de manière à entretoiser au moins une couche superficielle de fibres de verre, le grillage et la couche de verre étant noyés dans le matériau plastique.

Selon une caractéristique, le grillage métallique est gaufré et est enserré entre deux couches de fibres de verre.

Selon une caractéristique, le matériau plastique est une mousse de polyuréthane.

Selon une caractéristique, il comporte des inserts métalliques ayant des parties extérieures et noyés dans la couche sandwich, ces inserts étant en liaison électrique avec le grillage.

L'invention va maintenant être décrite avec plus de détails en se référant à des modes de réalisation donnés à titre d'exemples et représentés par les dessins annexés, sur lesquels :

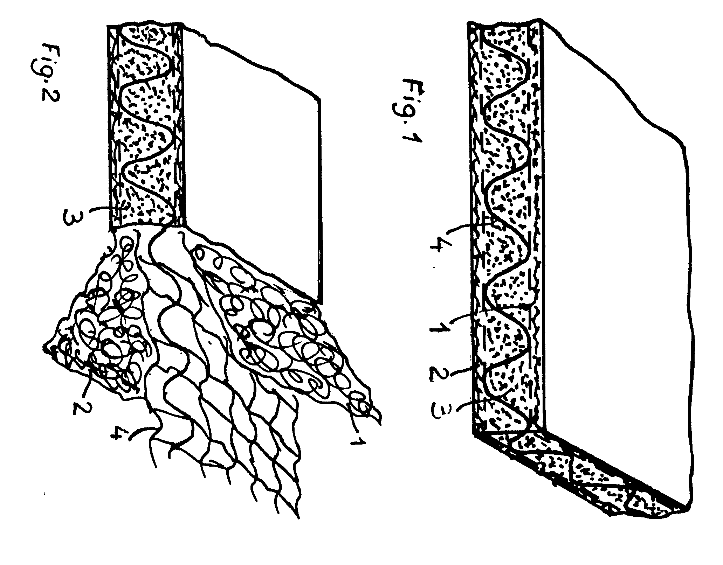

la figure 1 est une vue schématique du sandwich selon l'invention;

la figure 2 est une vue des composants du sandwich pendant la fabrication;

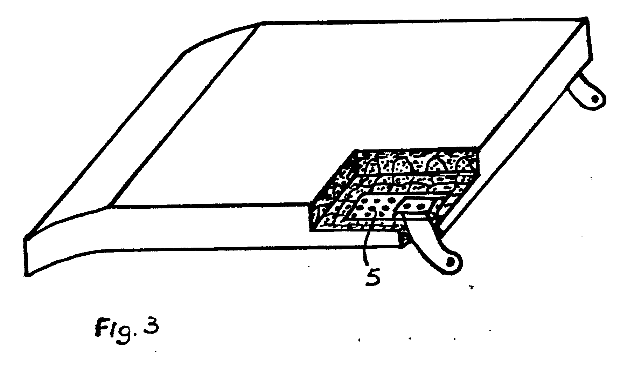

la figure 3 montre un ouvrant constitué par le sandwich selon l'invention et des inserts.

En se référant aux dessins, le sandwich se compose d'une couche de mousse 3, dans laquelle sont noyés deux couches superficielles de fibres de verre 1 et 2 et un grillage intercalaire 4 métallique.

La mousse 3 rigide est constituée par du polyuréthane.

Le grillage intercalaire 3 est gaufré ou ondulé. Il forme des bosses et des creux et occupe une épaisseur supérieure à l'épaisseur du grillage aplati, de manière à entretoiser les deux couches de fibres de verre 1 et 2. Les couches de fibres de verre sont au contact du grillage. A titre indicatif, le grillage peut être en cuivre étamé.

Pour la fabrication du sandwich, on déforme le grillage de manière a le gaufrer. Ce grillage gaufré et enserré entre deux couches de fibres de verre est placé dans un moule. Les couches de fibres de verre viennent au contact du moule où l'on injecte la mousse plastique. Les peaux de la plaque sandwich sont donc formées de fibres de verre noyées dans la mousse plastique.

Dans le cas d'un capot, des inserts métalliques 5 sont placés dans le moule, de manière à être noyés dans la couche de mousse au moment de l'injection. Ces inserts 5 qui comportent des parties extérieures présentent des perforations dans lesquelles passe la mousse de plastique. Les inserts 5 et le grillage sont en liaison électrique de manière à assurer une fonction antiparasitage.

## Revendications

1. Pièce de carrosserie à structure composite constituée par une plaque en matériau plastique, dans laquelle est noyé un grillage métallique (4), caractérisée par le fait que ce grillage (4) est conformé de manière à entretoiser au moins une couche superficielle (12) de fibres de verre, le grillage (4) et la couche de verre (1,2) étant noyés dans le matériau plastique.

2. Pièce selon la revendication 1, caractérisée par le fait que le grillage métallique (4) est gaufré et est enserré entre deux couches (1,2) de fibres de verre.

3. Pièce selon l'une quelconque des revendications précédentes, caractérisée par le fait que le matériau plastique (3) est une mousse de polyuréthane.

4. Pièce du type capot, selon l'une quelconque des revendications précédentes, caractérisée par le fait qu'elle comporte des inserts métalliques (5) ayant des parties extérieures et noyés dans la couche sandwich, ces inserts (5) étant en liaison électrique avec le grillage.

5. Pièce selon la revendication 4, caractérisée par le fait que les inserts (5) présentent des perforations traversées par la mousse plastique.

Fig. 1

Fig. 2

Fig. 3

5

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5 ) |
|---|---|---|---|
| Y,D | EP-A-75641 (HEINZ)<br>* page 4, ligne 24 - page 5, ligne 17; figures 3, 4 * | 1-3 | B62D29/04<br>B62D25/10<br>B29C67/12<br>B29C67/14 |
| Y | EP-A-293612 (FERRARI)<br>* revendications 9, 10, 12, 15; figure 1 * | 1-3 | B32B5/02 |
| A | GB-A-2150075 (FORD MOTOR)<br>* abrégé; figures 4, 5 * | 4, 5 | |
| A | US-A-4764409 (FREEMAN)<br>* abrégé; figures 1-3 *<br>* colonne 1, lignes 40 - 54 * | 1, 2 | |
| A | AT-B-294436 (KONIG)<br>* page 1, ligne 35 - page 2, ligne 1; figure 4 * | 1, 2 | |
| A | BE-A-678640 (BORTOLASO)<br>* revendications 1-3; figure 5 * | 1-3 | |
| A | US-A-3992835 (SAVEKER)<br>* abrégé; figures 1, 2 * | 2 | **DOMAINES TECHNIQUES RECHERCHES (Int. Cl.5 )** |
| A,P | FR-A-2621677 (FRANCE DESIGN HENRI HEULIEZ S.A.)<br>* abrégé; figures 1, 12 * | 1-5 | B62D<br>E04C<br>B29C |
| A,P | DE-A-3908433 (R. SCHMIDT GMBH)<br>* abrégé; figure 8b * | 1-3 | B32B |

Le présent rapport a été établi pour toutes les revendications

| Lieu de la recherche | Date d'achèvement de la recherche | Examinateur |
|---|---|---|
| LA HAYE | 16 JUILLET 1990 | MYON G.J-P. |